# FASCICULE DE BREVET EUROPEEN

(11) **EP 0 981 142 B1**
(45) Date de publication et mention de la délivrance du brevet: **13.02.2002**
(21) Numéro de dépôt: 99402026.1
(22) Date de dépôt: 10.08.1999
(51) Int. Cl.: H01F 41/06

(54) **Dispositif de bobinage**
Vorrichtung zum Wickeln
Apparatus for winding

(30) Priorité: 14.08.1998 FR 9810528
(43) Date de publication de la demande: 23.02.2000
(73) Titulaire: Alstom France SA, 75116 Paris (FR)
(72) Inventeur: Bernaudat, Marc, 90 350 Evette-Salbert (FR)
(74) Mandataire: Gosse, Michel

(56) Documents cités:
- EP-A- 0 470 315
- EP-A- 0 674 328
- US-A- 4 884 759
- US-A- 5 461 773

## Description

L'invention concerne le domaine de la réalisation des bobines non planes de grandes dimensions utilisées pour constituer des aimants. De telles bobines de grandes dimensions sont notamment utilisées dans le domaine de la recherche en fusion nucléaire contrôlée pour les machines connues de l'homme de l'art sous la dénomination STELLARATOR.

De telles bobines sont constituées par l'enroulement d'au moins un fil en matériau conducteur électrique disposé en spires. Le fil conducteur peut présenter une section de taille et de forme variables selon les applications auxquelles est destiné l'aimant. Il peut être monolithique ou constitué de brins élémentaires.

Lorsque les spires constituant l'enroulement ont un profil de courbe plane et de géométrie simple, par exemple lorsqu'elles ont un profil circulaire, l'opération de bobinage effectuée pour leur réalisation ne pose pas de problème particulier. Une telle opération est généralement effectuée à partir de deux outils principaux présentant des axes parallèles de rotation, à savoir un dévidoir (également appelé "touret") de stockage du fil conducteur et un mandrin de bobinage de forme cylindrique sur lequel s'enroule le fil conducteur extrait du dévidoir.

Par contre, lorsque les spires constituant la bobine présentent un profil de courbe qui n'est pas plane (courbe gauche), l'opération de bobinage est beaucoup plus délicate à mettre en oeuvre. De telles courbes gauches peuvent en effet présenter des courbures selon trois directions et orientées dans un sens ou dans l'autre pour chaque direction, ce qui implique la nécessité d'utiliser des dispositifs de bobinage pouvant s'adapter à de telles courbures.

Les difficultés rencontrées pour la réalisation de tels bobines augmentent avec la taille de celles-ci et de celle du fil conducteur utilisé pour les constituer . En effet, plus ce fil conducteur est gros, plus il est difficile à déformer. A titre d'exemple, certaines bobines prévues pour le STELLARATOR et utilisées dans le cadre de la recherche en fusion nucléaire contrôlée, présentent des dimensions de quelques mètres et sont constituées par l'enroulement d'un fil conducteur présentant une section de l'ordre de 250 mm².

Les procédés habituels de bobinage des fils conducteurs en spires non planes pour la réalisation de bobines de grandes dimensions sont en général basés sur l'utilisation d'un mandrin de bobinage capable d'effectuer des mouvements de rotation autour de plusieurs axes liés ou non à ce mandrin. De tels mouvements de rotation associés à des mouvements de translation ou de pivotement du mandrin permettent de positionner, plus ou moins correctement, le fil conducteur sur le mandrin et ainsi de réaliser la bobine.

On connaît ainsi dans l'état de la technique, un équipement typique de bobinage d'un fil conducteur en spires non planes comprenant un mandrin pivotant monté sur un plateau tournant selon un axe vertical fixe. Ce type d'équipement inclut également un dévidoir monté en rotation selon un axe vertical conçu pour se déplacer également verticalement afin de maintenir le conducteur en position horizontale pendant l'opération de bobinage.

Ce type d'installation de bobinage ne donne pas entière satisfaction, notamment pour la réalisation de bobines constituées de spires présentant un profil de courbe gauche assez compliqué.

On peut notamment citer les inconvénients suivants à l'encontre de ce type d'équipements.

En premier lieu, on notera qu'il ne permet pas un positionnement aisé du fil conducteur au niveau des zones des courbes gauches qui présentent des plans osculateurs pratiquement parallèles à l'axe des rotation et dont la concavité est orientée vers le côté où se trouve le conducteur (on rappelle que le "plan osculateur" en un point d'une courbe gauche est le plan formé par la normale principale et la tangente en ce point). Dans ce cas, la tension de bobinage a tendance à écarter le conducteur de la position souhaitée sur le mandrin.

Un autre inconvénient suscité par le type d'équipement classique de l'état de l'art mentionné ci-dessus, consiste dans le fait que la courbure naturelle du conducteur à la sortie du dévidoir peut gêner son positionnement. Du fait de sa grande section, les efforts nécessaires pour redresser ce fil conducteur peuvent alors être non négligeables et par conséquence néfastes pour les propriétés électriques ou mécaniques de celui-ci.

On notera également que les grandes dimensions des bobines peuvent limiter le nombre de mouvements possibles du mandrin de bobinage ainsi que les angles de rotation et de pivotement maximum que ce mandrin peut effectuer. Ceci a pour conséquence d'entraîner des pertes possibles de précision de bobinage et donc de conduire à l'obtention d'un champ magnétique de moindre qualité.

On notera aussi qu'un support de bobinage en mouvement ne facilite pas la tâche des opérateurs au cours de l'opération de bobinage dont l'intervention est indispensable dans le cas de l'utilisation de gros fils conducteurs, notamment pour brider celui-ci.

On notera aussi que, dans la technique de bobinage de l'état de l'art, le dévidoir est généralement placé assez loin du mandrin de bobinage. Ainsi, tout positionnement d'une portion de conducteur entraîne des déformations de toute la partie de conducteur située entre le mandrin et le dévidoir, déformations qui sont susceptibles d'affecter le comportement mécanique ultérieur du conducteur.

Enfin, on notera que ce type d'installation est très encombrant pour la réalisation des très grandes bobines.

Le document US 4 884 759 décrit une installation de bobinage de petites bobines dans laquelle une tuyère de bobinage se déplace autour d'un gabarit de forme. Ce type d'intallation où le fil est tiré en passant par une tuyère, n'est pas utilisable pour des grandes bobines et où le fil est de grosse section.

L'objectif de la présente invention est de proposer un dispositif de bobinage pour la réalisation de bobines d'aimants ne présentant pas les différents inconvénients de la technique mentionnée ci-dessus.

Notamment, un objectif de la présente invention est de proposer un tel dispositif qui autorisent la réalisation de spires ayant un profil de courbe gauche avec un bon positionnement du fil conducteur, y compris au niveau des plans osculateurs qui sont pratiquement parallèles à l'axe de rotation.

Egalement, un objectif de la présente invention est de proposer un tel dispositif qui soit d'un encombrement réduit par rapport aux dispositifs de l'état de l'art.

L'invention a ainsi pour objet un dispositif de bobinage selon la revendication pour la réalisation d'une bobine d'aimant constituée par l'enroulement en spires non planes selon un profil de courbe gauche d'au moins un fil conducteur sur la surface de pose d'un mandrin comportant une surface latérale, ledit mandrin étant immobile, caractérisé par le fait que le fil conducteur est distribué sur ladite surface de pose au moyen d'un dévidoir d'axe O₁Z₁ qui parcourt en tournant autour de son axe O₁Z₁ ladite surface de pose, des moyens étant prévus pour maintenir la surface des plateaux du dévidoir, plateaux perpendiculaires à l'axe O₁Z₁, parallèle à ladite surface latérale dudit mandrin.

Le dispositif de l'invention peut être utilisé pour la réalisation de n'importe quelle type de bobine réalisée par enroulement d'un fil conducteur sur un mandrin, tout particulièrement lorsqu'il sera nécessaire de réaliser cet enroulement sour forme de spires non planes présentant un profil de courbe gauche, même compliqué. Le dispositif selon l'invention est ainsi particulièrement adapté à la réalisation des bobines d'aimants de grandes dimensions utilisées pour la recherche en fusion nucléaire contrôlée.

On notera que le fil conducteur utilisé pourra présenter une section de taille variable ainsi qu'une section de forme variable pouvant être notamment circulaire ou carrée.

Le dispositif comprend au moins un dévidoir d'un fil conducteur et des moyens de déplacement dudit dévidoir à proximité d'un mandrin fixe. En pratique, le dévidoir sera avantageusement ainsi positionné au-dessus du mandrin pour une distribution du fil conducteur sur celui-ci.

On comprendra que l'on pourra utiliser différents modes de réalisation des moyens de déplacement du dévidoir sans sortir du cadre de l'invention. Toutefois, selon une variante préférentielle, ces moyens de déplacement incluent une potence montée en rotation et à laquelle est relié ledit dévidoir. Une telle potence est destinée à être installé au centre du mandrin.

Avantageusement, la potence en question présente un axe vertical et est préférentiellement montée mobile en translation sur un rail qui peut notamment être fixé au sol ou sur un support fixé ou posé sur celui-ci.

Selon une variante préférentielle de l'invention, le dévidoir est relié à la potence par un bras qui, avantageusement, est préférentiellement pourvu de moyens permettant de faire varier la distance entre ladite potence et ledit dévidoir. A cet effet, ce bras pourra par exemple être prévu téléscopique ou monté sur rail sur l'extrémité supérieure de la potence.

Le bras en question est avantageusement horizontal et ainsi essentiellement perpendiculaire à la potence.

Egalement préférentiellement, ce bras comprend des moyens de pivotement angulaire de l'axe de rotation O₁Z₁ dudit dévidoir rotatif par rapport à un axe vertical lié au bras et par rapport à un axe horizontal lié au dévidoir.

Ces différentes caractéristiques techniques permettent de conférer au dévidoir une pluralité de positions dans l'espace, lui permettant de suivre le profil du mandrin et ainsi de permettre la pose sur celui-ci du fil conducteur en spires non planes.

L'invention, ainsi que les différents avantages qu'elle présente, seront plus facilement compris grâce à la description qui va suivre d'un exemple de réalisation non limitatif en référence aux dessins dans lesquels :
- la figure 1 représente une vue en perspective d'un dispositif de bobinage d'un fil conducteur sur un mandrin ;
- la figure 2 représente une vue de face du dispositif représenté à la figure 1 ;
- la figure 3 représente une vue de côté du mandrin représenté à la figure 1 ;
- la figure 4 représente une vue de dessus du dispositif représenté à la figure 1 ;
- les figures 5 et 6 représentent le pivotement angulaire du dévidoir du dispositif de bobinage ;
- la figure 7 représente un schéma des différents mouvements autorisés par le dispositif représenté en référence aux figures 1 à 6.

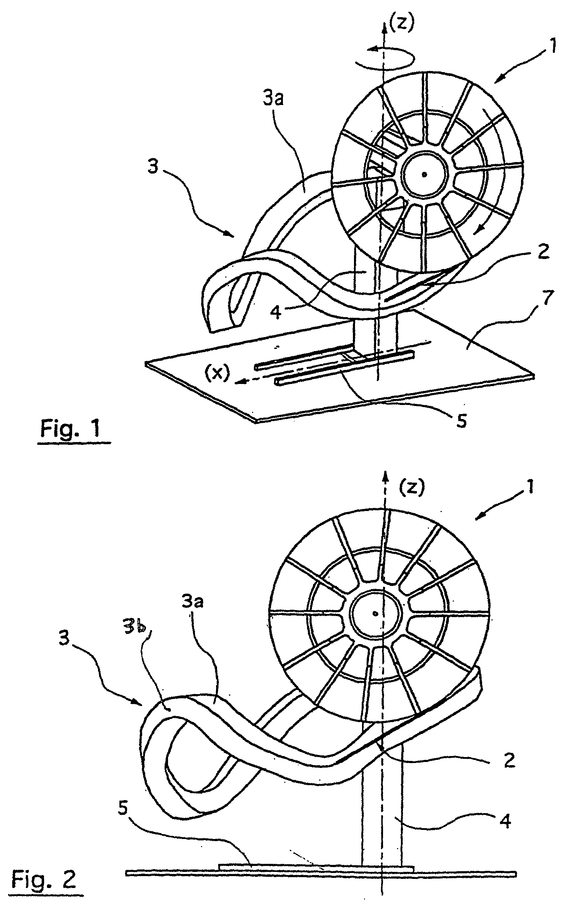

En référence aux figures 1 à 6, un dispositif pour la mise en oeuvre du procédé de bobinage décrit ci-dessus est représenté.

Ce dispositif est destiné à déposer un fil conducteur 2 selon un enroulement constitué de spires ayant un profil de courbe gauche, sur la surface de pose 3a d'un mandrin 3 ayant une surface latérale et présentant la forme adéquate.

La particularité du procédé de bobinage selon l'invention étant de mettre en oeuvre un dévidoir de fil conducteur mobile sur un mandrin immobile, le mandrin 3 est maintenu immobile grâce à de moyens spécialement conçus à cet effet, non représentés sur les figures pour des besoins de clarté de la description.

On notera, que le mandrin 3 présente une forme particulièrement complexe pour la réalisation de bobines d'aimants aux fins de recherche en fusion nucléaire contrôlée. La courbe gauche définie par ce mandrin pour les différentes spires de la bobine d'aimant présente des zones dans lesquelles les plans osculateurs sont pratiquement parallèles à la verticale. De telles zones sont celles qui posent le plus de problèmes pour la réalisation de l'enroulement avec les dispositifs classiques.

Le mode de réalisation du dispositif de bobinage selon l'invention ici proposé comprend un dévidoir 1 du fil conducteur 2. Ce dévidoir 1 est du type monté en rotation selon un axe de rotation O₁ Z₁ essentiellement horizontal.

Le dispositif comprend par ailleurs des moyens qui seront décrits plus en détail ci-après, prévus pour organiser la mobilité du dévidoir 1 au-dessus de la surface de pose 3a du mandrin 3.

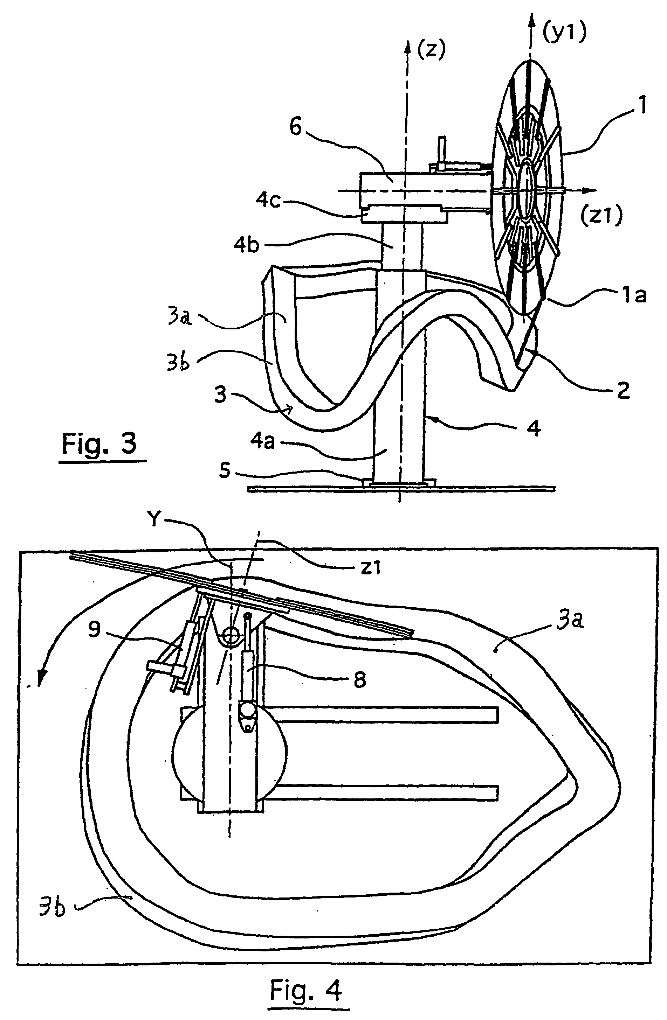

Ces moyens de déplacement incluent une potence 4 dont l'extrémité inférieure est montée dans un rail 5 installé sur un plancher-support 7. Ce rail 5 est conçu pour autoriser le déplacement en translation de la potence 4 selon un axe X. Comme on peut le voir plus précisément sur la figure 3, la potence 4 est télescopique et constituée de deux éléments 4a et 4b, l'élément 4b étant conçu pour coulisser dans l'élément 4a. Ce coulissement permet de faire varier la hauteur de la potence 4 et ainsi de conférer au dévidoir 1 un degré de liberté selon l'axe Z, perpendiculaire à l'axe X.

Comme on peut le voir plus précisément sur la figure 3, les moyens de déplacement de ce dévidoir 1 incluent également un bras 6 monté à l'extrémité supérieure de la potence 4 et plus précisément de l'élément 4b de celle-ci. Ce bras 6 coulisse dans un rail 4c prévu à l'extrémité supérieure de l'élément 4b de la potence 4. Une telle caractéristique permet de faire varier la distance entre le dévidoir 1 et la potence 4.

On notera également que l'élément 4b de la potence 4 est monté en rotation dans l'élément 4a, ce qui permet au dévidoir d'être mu en rotation selon l'axe Z.

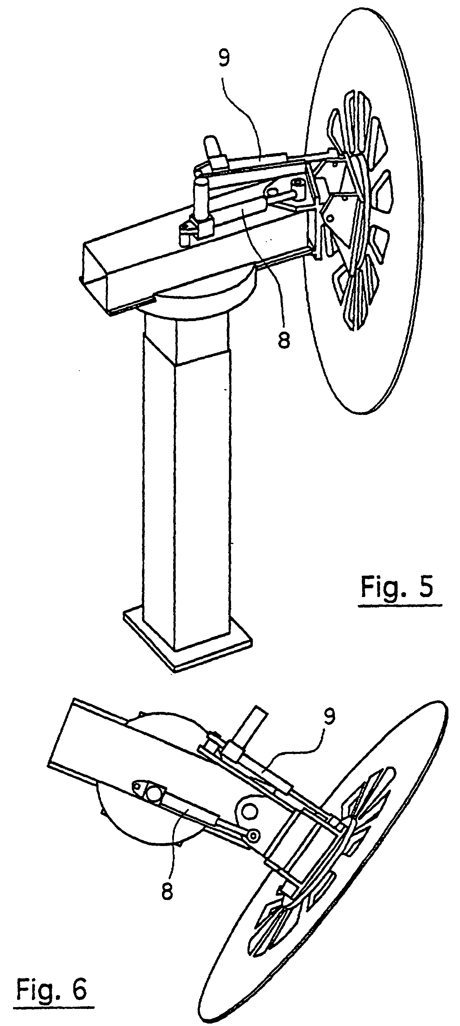

Comme on peut le voir plus précisément sur la figure 5 et sur la figure 6, les moyens de déplacement du dévidoir 1 incluent également des moyens de pivotement angulaire de l'axe de rotation O₁ Z₁ du dévidoir 1. Dans le cadre du présent mode de réalisation, ces moyens de pivotement incluent des vérins, à savoir :
- un vérin 8 permettant des mouvement sautour d'un axe vertical lié au bras 6,
- un vérin 9 permettant des mouvements de pivotement autour d'un axe horizontal lié au dévidoir 1.

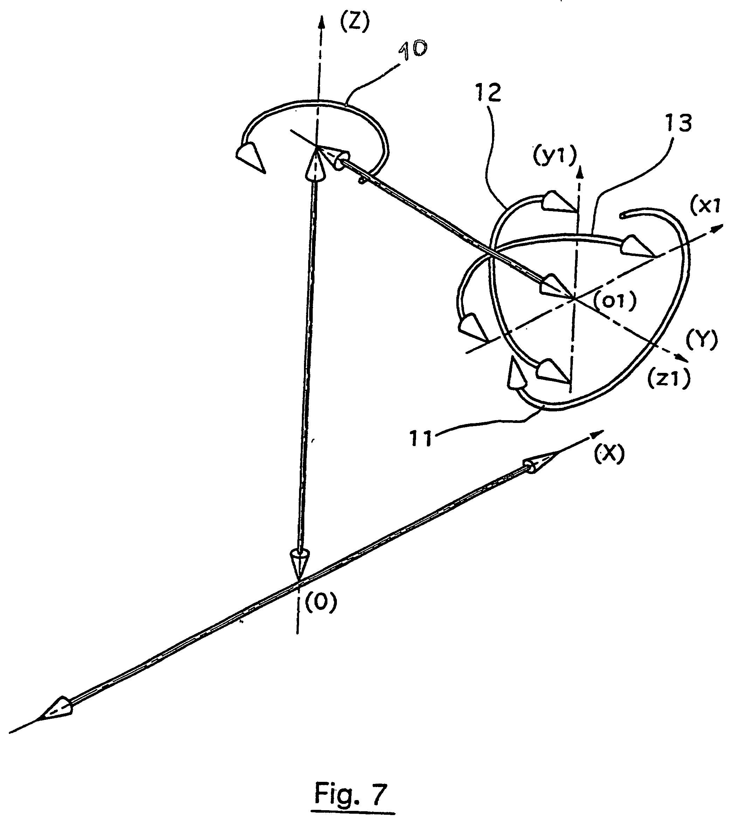

Les différentes caractéristiques des moyens de déplacement du dévidoir 1 permettent de déplacer celui-ci selon sept mouvements distincts qui sont symbolisés sur la figure 7 de façon schématique.

Le premier mouvement permet de déplacer ce dévidoir selon l'axe X.

La potence télescopique 4 permet de déplacer le dévidoir 1 selon l'axe Z. Cette potence étant également montée en rotation, il est également possible de déplacer le dévidoir 1 selon une course circulaire (360°) symbolisée sur la figure 7 par la flèche 10.

Le bras 6 monté dans le rail 4c permet de déplacer le dévidoir 1 selon l'axe longitudinal du bras.

Les vérins 8 et 9 permettent de faire varier l'inclinaison de l'axe de rotation O₁Z₁ du dévidoir 1 selon deux directions comme indiqué par les flèches 13 et 12, le dévidoir étant de plus monté en rotation autour de l'axe O₁Z₁ comme indiqué par la flèche 11.

De tels moyens de déplacement permettent donc de maintenir en permanence la surface de distribution 1a du dévidoir 1 essentiellement parallèle à la surface de pose du mandrin 3 et ainsi d'obtenir un enroulement en spires de profil gauche de qualité parfaite.

Le mode de réalisation de l'invention ici décrit n'a pas pour objet de réduire la portée de celle-ci. En conséquence, il pourra y être apporté de nombreuses modifications sans ressortir de son cadre tel que défini par les revendications. On notera tout particulièrement qu'il pourra être envisagé d'organiser les mouvements du dévidoir 1 au-dessus du mandrin avec d'autres moyens que ceux indiqués.

## Revendications

1. Dispositif de bobinage pour la réalisation d'une bobine d'aimant constituée par l'enroulement en spires non planes selon un profil de courbe gauche d'au moins un fil conducteur (2) sur la surface de pose (3a) d'un mandrin comportant une surface latérale (3b), ledit mandrin étant immobile, **caractérisé par le fait que** le fil conducteur est distribué sur ladite surface de pose (3a) au moyen d'un dévidoir (1) d'axe O₁Z₁ qui parcourt en tournant autour de son axe O₁Z₁ ladite surface de pose (3a), des moyens étant prévus pour maintenir la surface des plateaux du dévidoir, plateaux perpendiculaires à l'axe O₁Z₁, parallèle à ladite surface latérale (3b) dudit mandrin.

2. Dispositif selon la revendication 1, **caractérisé en ce que** ledit dévidoir (1) est positionné au-dessus dudit mandrin (3).

3. Dispositif selon l'une des revendications 1 ou 2, **caractérisé en ce que** ledit dévidoir est lié à une potence (4) montée en rotation.

4. Dispositif selon la revendication 3, **caractérisé en ce que** l'axe de rotation (Z) de ladite potence (4) est vertical.

5. Dispositif selon les revendications 3 ou 4, **caractérisé en ce que** ladite potence (4) est montée mobile en translation sur un rail (5).

6. Dispositif selon l'une quelconque des revendications 3 à 5, **caractérisé en ce que** ledit dévidoir (1) est relié à ladite potence (4) par un bras (6).

7. Dispositif selon la revendication 6, **caractérisé en ce que** ledit bras (6) est pourvu de moyens permettant de faire varier la distance entre ladite potence (4) et ledit dévidoir (1).

8. Dispositif selon l'une des revendications 6 ou 7, **caractérisé en ce que** ledit bras (6) est essentiellement horizontal.

9. Dispositif selon l'une quelconque des revendications 6 à 8, **caractérisé en ce que** ledit bras (6) comprend des moyens de pivotement angulaire de l'axe de rotation (O₁Z₁) dudit dévidoir rotatif (1) par rapport à un axe vertical lié au bras (6) et par rapport à un axe horizontal lié au dévidoir (1).

## Claims

1. A winding device for forming a magnet coil made up of a winding formed by winding at least one conductor wire (2) in non-plane turns with a three-dimensional curve profile over the laying surface (3a) of a former having a side surface (3b), said former being stationary, said winding device being **characterized by** the fact that the conductor wire is dispensed over said laying surface (3a) by means of an unreeling device (1) of axis O₁Z₁ that travels over said laying surface (3a) while rotating about its axis O₁Z₁, means being provided for maintaining the surfaces of the plates of the unreeling device parallel to said side surface (3b) of said former, said plates being perpendicular to the axis O₁Z₁.

2. A winding device according to claim 1, **characterized in that** said unreeling device (1) is positioned above said former (3).

3. A winding device according to claim 1 or claim 2, **characterized in that** said unreeling device is associated with a bracket (4) that is mounted to rotate.

4. A winding device according to claim 3, **characterized in that** the axis of rotation (Z) of said bracket (4) is vertical.

5. A winding device according to claim 3 or claim 4, **characterized in that** said bracket (4) is mounted to move in translation along a rail (5).

6. A winding device according to any one of claims 3 to 5, **characterized in that** said unreeling device (1) is connected to said bracket (4) via an arm (6).

7. A winding device according to claim 6, **characterized in that** said arm (6) is provided with means making it possible to vary the distance between said bracket (4) and said unreeling device (1).

8. A winding device according to claim 6 or claim 7, **characterized in that** said arm (6) is essentially horizontal.

9. A winding device according to any one of claims 6 to 8, **characterized in that** said arm (6) is provided with angular pivot means for angularly pivoting the axis of rotation (O₁Z₁) of said rotary unreeling device (1) relative to a vertical axis associated with the arm (6) and relative to a horizontal axis associated with the unreeling device (1).

## Patentansprüche

1. Wickelvorrichtung für die Realisierung einer Magnetspule, gebildet aus Wicklungen zumindest eines leitenden Drahtes (2) in nicht ebenen Windungen mit einem Raumprofil auf der Anordnungsoberfläche (3a) einer Hülse, die eine seitliche Oberfläche (3b) umfasst, wobei die Hülse unbeweglich ist, **gekennzeichnet durch** die Tatsache, dass der leitende Draht auf der Anordnungsoberfläche (3a) mittels eines Abrollhaspels (1) mit einer Achse O₁ Z₁ verteilt wird, der um seine Achse O₁ Z₁ drehend die Anordnungsoberfläche (3a) abfährt, wobei Einrichtungen vorgesehen sind, um die Oberfläche der Platten des Abrollhaspels, wobei die Platten rechtwinklig zur Achse O₁ Z₁ sind, parallel zu der seitlichen Oberfläche (3b) der Hülse zu halten.

2. Vorrichtung nach Anspruch 1, **dadurch gekennzeichnet, dass** der Abrollhaspel (1) über der Hülse (3) positioniert ist.

3. Vorrichtung nach einem der Ansprüche 1 oder 2, **dadurch gekennzeichnet, dass** der Abrollhaspel mit einem Träger (4) verbunden ist, der drehbar montiert ist.

4. Vorrichtung nach Anspruch 3, **dadurch gekennzeichnet, dass** die Rotationsachse (Z) des Trägers (4) vertikal ist.

5. Vorrichtung nach einem der Ansprüche 3 oder 4, **dadurch gekennzeichnet, dass** der Träger (4) translationsbeweglich auf einer Schiene (5) montiert ist.

6. Vorrichtung nach einem der Ansprüche 3 bis 5, **dadurch gekennzeichnet, dass** der Abrollhaspel (1) mit dem Träger (4) über einen Arm (6) verbunden ist.

7. Vorrichtung nach Anspruch 6, **dadurch gekennzeichnet, dass** der Arm (6) mit Einrichtungen versehen ist, die es ermöglichen, die Distanz zwischen dem Träger (4) und dem Abrollhaspel (1) zu varriieren.

8. Vorrichtung nach einem der Ansprüche 6 oder 7, **dadurch gekennzeichnet, dass** der Arm (6) im wesentlichen horizontal ist.

9. Vorrichtung nach einem der Ansprüche 6 bis 8, **dadurch gekennzeichnet, dass** der Arm (6) Einrichtungen zur Winkelverschwenkung der Rotationsachse (O₁ Z₁) des drehbaren Abrollhaspels (1) bezüglich einer vertikalen Achse umfasst, verbunden mit dem Arm (6), und bezüglich einer Horizontalachse, verbunden mit dem Abrollhaspel (1).
